# EUROPEAN PATENT APPLICATION

(11) **EP 4 340 517 A1**
(43) Date of publication of application: **20.03.2024**
(21) Application number: 22807821.8
(22) Date of filing: 11.05.2022
(51) Int. Cl.: H04W 74/00, H04W 74/08, H04W 72/04, H04W 76/28, H04L 1/00

(54) **METHOD FOR TRANSMITTING AND RECEIVING DOWNLINK CONTROL CHANNEL AND DEVICE FOR SAME**

(30) Priority: 12.05.2021 KR 20210061467
(71) Applicant: LG Electronics Inc., Yeongdeungpo-gu Seoul 07336 (KR)
(72) Inventor: LEE, Sunghoon, Seoul 06772 (KR); YANG, Suckchel, Seoul 06772 (KR); HWANG, Seunggye, Seoul 06772 (KR); LEE, Youngdae, Seoul 06772 (KR); KIM, Jaehyung, Seoul 06772 (KR)
(74) Representative: Mooser, Sebastian Thomas
(86) International application number: PCT/KR2022/006721
(87) International publication number: WO 2022/240174

(57) **Abstract**

Disclosed is a method for a terminal to receive a physical downlink control channel (PDCCH) in a wireless communication system. In particular, the method comprises the steps of: monitoring a first search space set (SS Set) on the basis of PDCCH monitoring adaptation; transmitting an uplink (UL) signal; monitoring a second SS Set associated with the UL signal in a PDCCH monitoring window based on the UL signal having been transmitted; and transmitting the PDCCH through the second SS Set, wherein the UL signal is a scheduling request (SR) or a random access channel (RACH), and in the PDCCH monitoring window, (i) the first SS Set can not be monitored and the second SS Set can be monitored, or (ii) the first SS Set and the second SS Set can both be monitored.

## Description

### TECHNICAL FIELD

The present disclosure relates to a method of transmitting and receiving a downlink control channel and an apparatus therefor and, more specifically, to a method of monitoring a physical downlink control channel (PDCCH) corresponding to transmission of a scheduling request (SR) or a random access channel (RACH) and an apparatus therefor.

### BACKGROUND ART

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### Technical Problem

An object of the present disclosure is to provide a method of transmitting and receiving a downlink control channel and an apparatus therefor.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

### Technical Solution

According to an aspect of the present disclosure, provided herein is a method of receiving a physical downlink control channel (PDCCH) by a user equipment (UE) in a wireless communication system, including monitoring a first search space (SS) set based on PDCCH monitoring adaptation, transmitting an uplink (UL) signal, monitoring a second SS set related with the UL signal within a PDCCH monitoring window based on transmission of the UL signal, and receiving the PDCCH through the second SS set. The UL signal may be a scheduling request (SR) or a random access channel (RACH). Within the PDCCH monitoring window, (i) monitoring of the first SS set may be skipped and the second SS set may be monitored, or (ii) the first SS set and the second SS set may be monitored.

The second SS set may be one of all SS sets in which the PDCCH is capable of being received.

The second SS set may have a periodicity shorter than a duration of the PDCCH monitoring window.

The second SS set may be related with a control resource set (CORESET) related with the PDCCH monitoring window.

Monitoring of the second SS set may be skipped within the PDCCH monitoring window based on reception of the PDCCH.

A periodicity of the second SS set may be changed to one slot only within the PDCCH monitoring window based on the periodicity of the second SS set exceeding one slot.

In another aspect of the present disclosure, provided herein is a user equipment (UE) for receiving a physical downlink control channel (PDCCH) in a wireless communication system, including at least one transceiver; at least one processor; and at least one memory operably connected to the at least one processor and storing instructions that, when executed, cause the at least one processor to perform operations. The operations include monitoring a first search space (SS) set based on PDCCH monitoring adaptation, transmitting an uplink (UL) signal through the at least one transceiver, monitoring a second SS set related with the UL signal within a PDCCH monitoring window based on transmission of the UL signal, and receiving, through the at least one transceiver, the PDCCH through the second SS set. The UL signal may be a scheduling request (SR) or a random access channel (RACH). Within the PDCCH monitoring window, (i) monitoring of the first SS set may be skipped and the second SS set may be monitored, or (ii) the first SS set and the second SS set may be monitored.

The second SS set may be one of all SS sets in which the PDCCH is capable of being received.

The second SS set may have a periodicity shorter than a duration of the PDCCH monitoring window.

The second SS set may be related with a control resource set (CORESET) related with the PDCCH monitoring window.

Monitoring of the second SS set may be skipped within the PDCCH monitoring window based on reception of the PDCCH.

A periodicity of the second SS set may be changed to one slot only within the PDCCH monitoring window based on the periodicity of the second SS set exceeding one slot.

In another aspect of the present disclosure, provided herein is an apparatus for receiving a physical downlink control channel (PDCCH) in a wireless communication system, including at least one processor; and at least one memory operably connected to the at least one processor and storing instructions that, when executed, cause the at least one processor to perform operations. The operations include monitoring a first search space (SS) set based on PDCCH monitoring adaptation, transmitting an uplink (UL) signal, monitoring a second SS set related with the UL signal within a PDCCH monitoring window based on transmission of the UL signal, and receiving the PDCCH through the second SS set. The UL signal may be a scheduling request (SR) or a random access channel (RACH). Within the PDCCH monitoring window, (i) monitoring of the first SS set may be skipped and the second SS set may be monitored, or (ii) the first SS set and the second SS set may be monitored.

In another aspect of the present disclosure, provided herein is a computer-readable storage medium including at least one computer program that causes at least one processor to perform operations. The operations include monitoring a first search space (SS) set based on PDCCH monitoring adaptation, transmitting an uplink (UL) signal, monitoring a second SS set related with the UL signal within a PDCCH monitoring window based on transmission of the UL signal, and receiving the PDCCH through the second SS set. The UL signal may be a scheduling request (SR) or a random access channel (RACH). Within the PDCCH monitoring window, (i) monitoring of the first SS set may be skipped and the second SS set may be monitored, or (ii) the first SS set and the second SS set may be monitored.

In another aspect of the present disclosure, provided herein is a method of transmitting a physical downlink control channel (PDCCH) by a base station (BS) in a wireless communication system, including transmitting a first PDCCH through a first search space (SS) set based on PDCCH monitoring adaptation, receiving an uplink (UL) signal, and transmitting a second PDCCH through a second SS set related with the UL signal within a PDCCH monitoring window based on reception of the UL signal. The UL signal may be a scheduling request (SR) or a random access channel (RACH). Within the PDCCH monitoring window, (i) PDCCH transmission through the first SS set may be skipped and PDCCH transmission through the second SS set may be performed, or (ii) PDCCH transmission through the first SS set and PDCCH transmission through the second SS set may be performed.

In another aspect of the present disclosure, provided herein is a base station (BS) for transmitting a physical downlink control channel (PDCCH) in a wireless communication system, including at least one transceiver; at least one processor; and at least one memory operably connected to the at least one processor and storing instructions that, when executed, cause the at least one processor to perform operations. The operations include transmitting, through the at least one transceiver, a first PDCCH through a first search space (SS) set based on PDCCH monitoring adaptation, receiving an uplink (UL) signal through the at least one transceiver, and transmitting, through the at least one transceiver, a second PDCCH through a second SS set related with the UL signal within a PDCCH monitoring window based on reception of the UL signal. The UL signal may be a scheduling request (SR) or a random access channel (RACH). Within the PDCCH monitoring window, (i) PDCCH transmission through the first SS set may be skipped and PDCCH transmission through the second SS set may be performed, or (ii) PDCCH transmission through the first SS set and PDCCH transmission through the second SS set may be performed.

### Advantageous Effects

According to the present disclosure, a PDCCH monitoring adaptation operation for power saving is indicated through downlink control information (DCI), so that a UE may receive an uplink (UL) grant or a random access response (RAR) corresponding to an SR or an RACH as in an existing NR system even when the UE monitors a PDCCH according to the DCI indication.

Therefore, according to the present disclosure, an efficient operation may be performed without restrictions on receiving the UL grant or the RAR corresponding to the SR or the RACH while reducing unnecessary power consumption of the UE through the PDCCH monitoring adaptation operation.

It is to be understood that both the foregoing general description and the following detailed description of the present disclosure are exemplary and explanatory and are intended to provide further explanation of the disclosure as claimed.

### BRIEF DESCRIPTION OF DRAWINGS

FIG. 1 illustrates a radio frame structure;
FIG. 2 illustrates a resource grid of a slot;
FIG. 3 shows an example in which a physical channel is mapped in a slot;
FIGS. 4 and 5 are diagrams for explaining idle mode discontinuous reception (DRX) operation;
FIGS. 6 to 8 are diagrams for explaining DRX operation in a radio resource control (RRC) connected mode;
FIG. 9 is a diagram for explaining a method of monitoring DCI format 2_6;
FIGS. 10 to 12 are diagrams for explaining the overall operation processes of a UE and a BS according to an embodiment of the present disclosure;
FIG. 13 is a diagram for explaining SR transmission of a UE and a response procedure of a BS according to an embodiment of the present disclosure;
FIG. 14 is a diagram for explaining a method of configuring a UL grant monitoring window according to an embodiment of the present disclosure;
FIG. 15 illustrates an exemplary communication system applied to the present disclosure;
FIG. 16 illustrates an exemplary wireless device applicable to the present disclosure;
FIG. 17 illustrates an exemplary vehicle or autonomous driving vehicle applicable to the present disclosure; and
FIG. 18 illustrates an extended reality (XR) device applicable to the present disclosure.

### MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

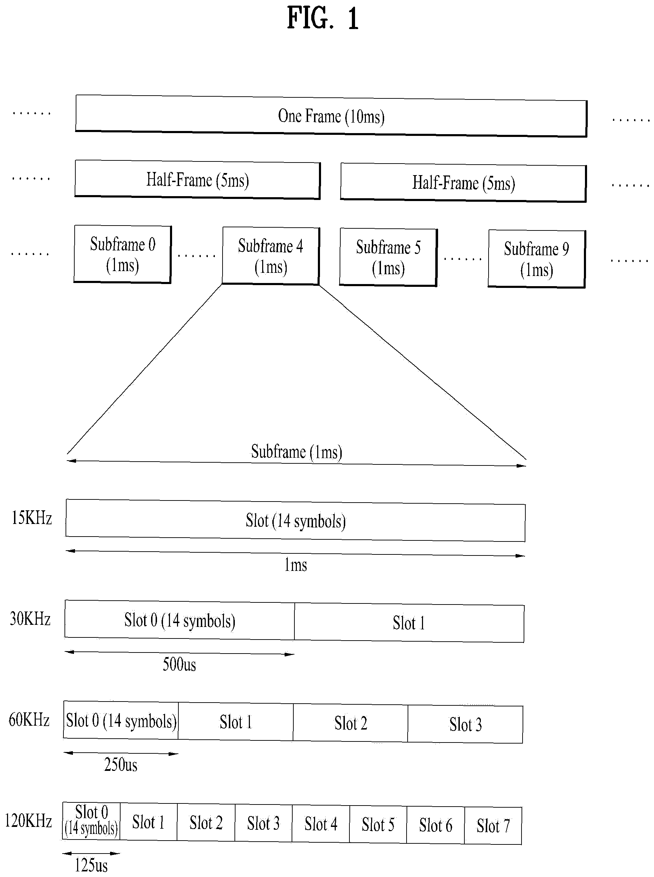

FIG. 1 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | Nslotsymb | Nframe,uslot | Nsubframe,uslot |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| **[59]** * N^{slot}_{symb}: number of symbols in a slot **[60]** * N^{frame,u}ₛₗₒₜ: number of slots in a frame **[61]** * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | Nslotsymb | Nframe,uslot | Nsubframe,uslot |
|---|---|---|---|
| 60KHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5^{th} generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

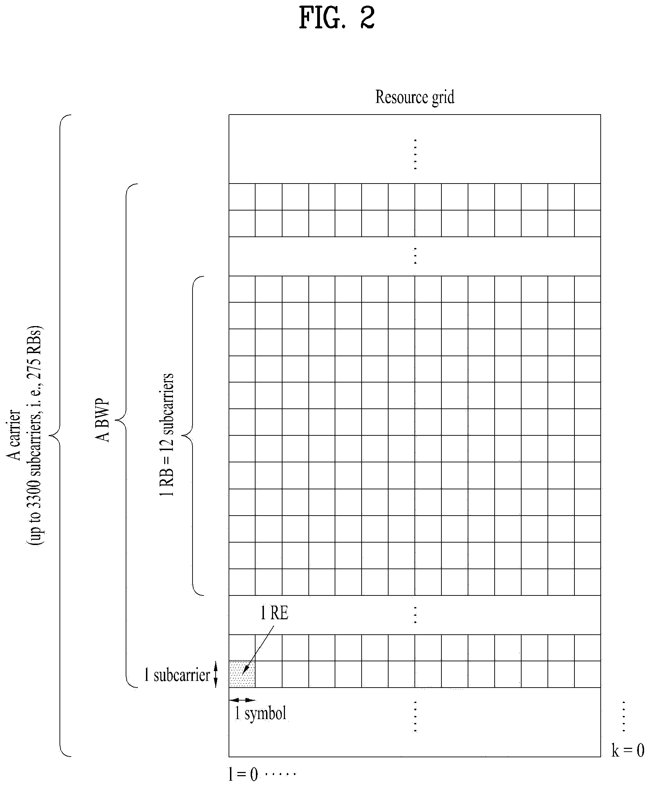

FIG. 2 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

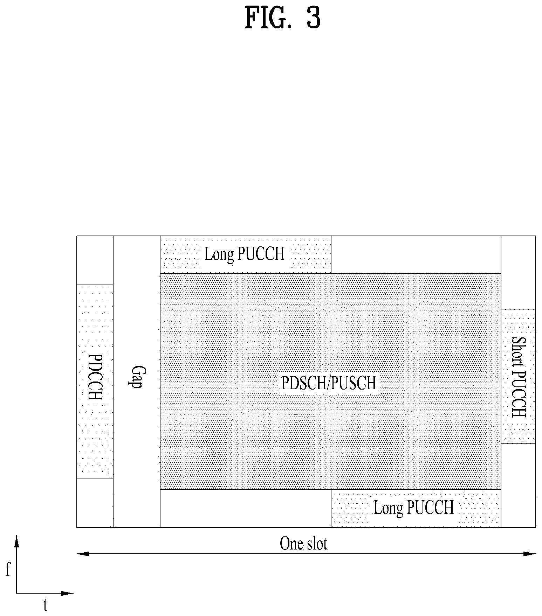

FIG. 3 shows an example in which a physical channel is mapped in a slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

### DL Channel Structures

An eNB transmits related signals on later-described DL channels to a UE, and the UE receives the related signals on the DL channels from the eNB.

### (1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

### (2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

**[Table 4]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DL BWP of a serving cell. For example, the following parameters/information may be provided for each SS set. Each SS set may be associated with one CORESET, and each CORESET configuration may be associated with one or more SS sets. - searchSpaceId: indicates the ID of the SS set.
- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.

Table 5 illustrates exemplary DCI formats transmitted on the PDCCH.

**[Table 5]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

### DRX (Discontinuous Reception) operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect the PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.
- RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB1).

The SIB1 may include an eDRX-Allowed parameter. The eDRX-Allowed parameter is a parameter indicating whether Idle mode extended DRX is permitted.

### (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT(mobile termination).

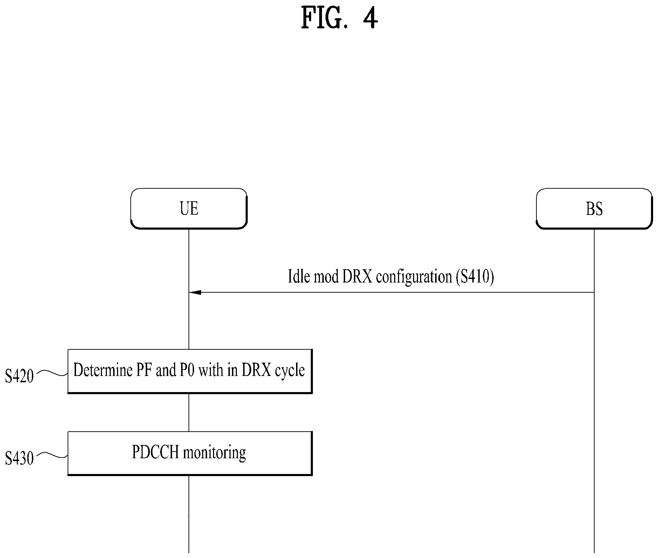

FIG. 4 is a flowchart showing an example of a method of performing an Idle mode DRX operation.

A UE receives, from a base station, Idle mode DRX configuration information through a higher layer signaling (e.g., system information) (S410).

Furthermore, the UE determines a PF (Paging Frame) and a PO (Paging Occasion), for monitoring a physical downlink control channel (e.g., PDCCH) in a paging DRX cycle based on the Idle mode DRX configuration information (S420). In this case, the DRX cycle includes On Duration and sleep duration (or Opportunity for DRX).

Furthermore, the UE monitors a PDCCH in the PO of the determined PF (S430). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station.

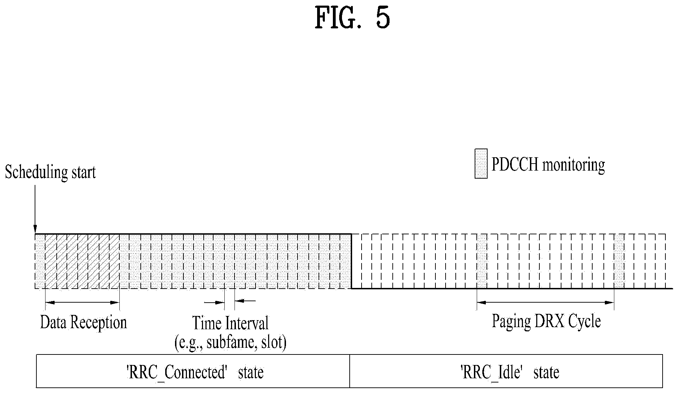

FIG. 5 is a diagram showing an example of an Idle mode DRX operation.

Referring to FIG. 5, if there is a traffic (data) toward a UE in the RRC_Idle state (hereinafter referred to as 'Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

### (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

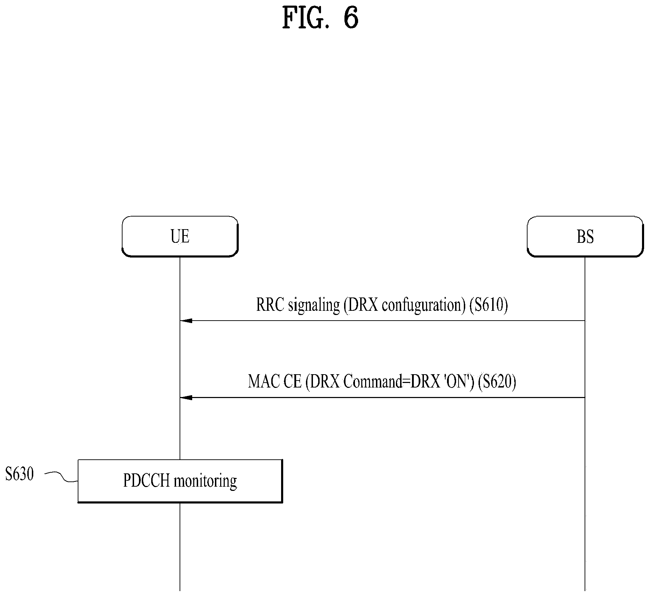

FIG. 6 is a flowchart showing an example of a method of performing a C-DRX operation.

A UE receives, from a base station, RRC signalling (e.g., MAC-MainConfig IE) including DRX configuration information (S610). The DRX configuration information may include the following information.
- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- di-x-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S620), the UE monitors a PDCCH for the ON duration of a DRX cycle based on the DRX configuration (S630).

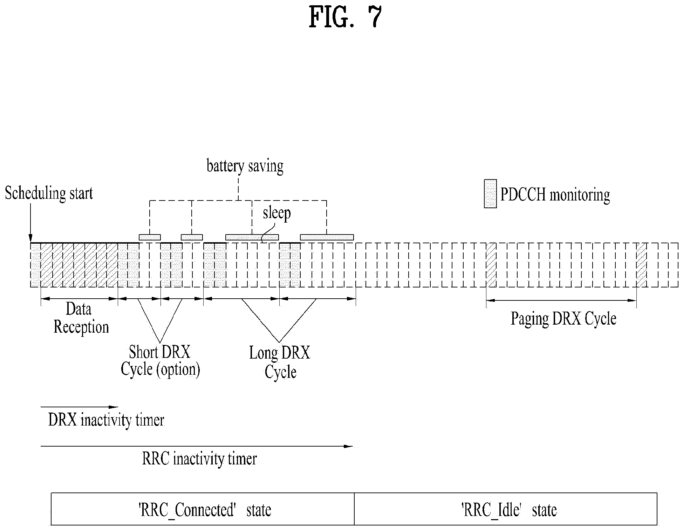

FIG. 7 is a diagram showing an example of a C-DRX operation.

Referring to FIG. 7, when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

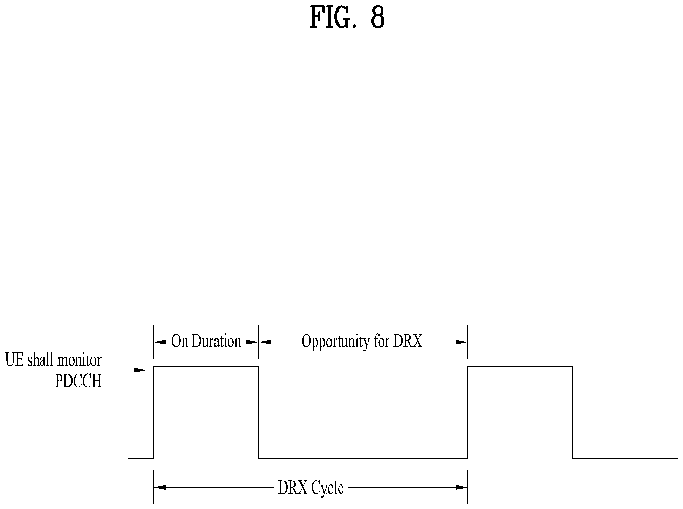

FIG. 8 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6

According to the power saving technology of Rel-16 NR systems, when the DRX operation is performed, it is possible to inform the UE whether the UE needs to wake up for each DRX cycle by DCI format 2_6.

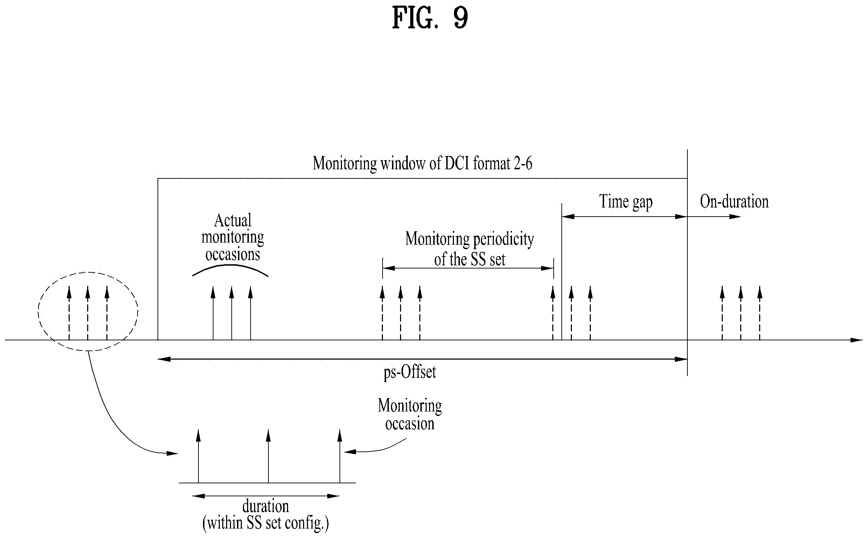

Referring to FIG. 9, a PDCCH monitoring occasion for DCI format 2_6 may be determined by *ps-Offset* indicated by the network and a time gap reported by the UE. In this case, the time gap reported by the UE may be interpreted as a preparation period necessary for an operation after the UE wakes up.

Referring to FIG. 9, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

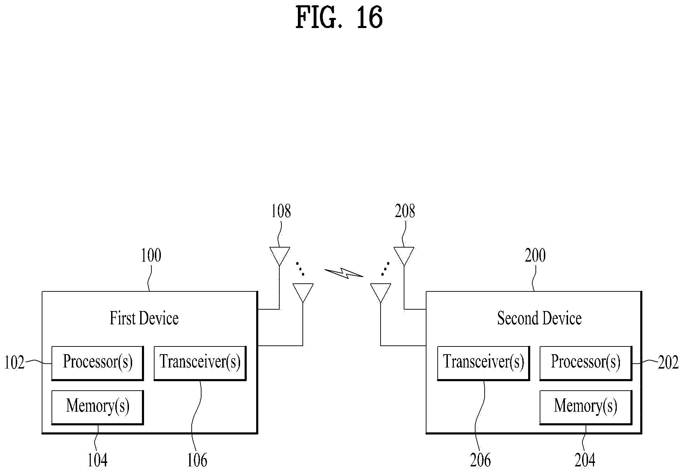

In the DRX configuration, a monitoring window for monitoring DCI format 2_6 may be determined by the start time of the DRX cycle (e.g., a point where the on-duration timer starts) and *ps-Offset* configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 16) within the monitoring window.

If the UE detects DCI format 2_6 in the monitoring window configured based on *ps-Offset*, the UE may be informed by the BS whether the UE wakes up in the next DRX cycle.

### Search Space Set (SS Set) Group Switching

In the current NR standards, the SS set group switching has been defined to reduce the power consumption of the UE. According to the SS set group switching, the UE may be configured with a plurality of SS set groups, and an SS set group to be monitored by the UE among the plurality of SS set groups may be indicated. In addition, the UE may monitor an SS set included in the corresponding SS set group according to the corresponding indication and skip monitoring of SS sets not included in the corresponding SS set group.

For example, the UE may be provided with a list of SS set groups configured with a Type 3-PDCCH common search space (CSS) set and/or a user-specific search space (USS) set. In addition, if a list of SS set groups is provided, the UE may monitor SS sets corresponding to group index #0.

The UE may perform the SS set group switching operation depending on whether SearchSpaceSwitchTrigger is configured.

If SearchSpaceSwitchTrigger is configured for the UE, the UE may switch the SS set group according to the indication of DCI format 2_0.

For example, if the value of an SS Set Group Switching Flag field in DCI format 2_0 is 0, the UE may start monitoring SS set group #0 after a predetermined time from the time when the UE receives DCI format 2_0 and stop monitoring SS set group #1.

If the value of the SS Set Group Switching Flag field in DCI format 2_0 is 1, the UE may start monitoring SS set group #1 after a predetermined time from the time when the UE receives DCI format 2_0 and stop monitoring SS set group #0. If the UE starts monitoring SS set group #1, the UE may start counting a timer configured by SearchSpaceSwitchTimer. If the timer expires, the UE may start monitoring SS set group #0 after a predetermined time from the time when the timer expires and stop monitoring SS set group #1.

If SearchSpaceSwitchTrigger is not configured for the UE, the UE may change the SS set group based on DCI reception. For example, when the UE receives the DCI while monitoring SS set group #0 (or SS set group #1), the UE may start monitoring SS set group #1 (or SS set group #0) after a predetermined time from the time when the UE receives the DCI and stop monitoring SS set group #0 (or SS set group #1). In this case, the UE may start counting the timer configured by SearchSpaceSwitchTimer. If the timer expires, the UE may start monitoring SS set group #0 (or SS set group #1) after a predetermined time from the time when the timer expires and stop monitoring SS set group #1 (or SS set group #0).

The present disclosure proposes an implicit PDCCH monitoring adaptation operation triggered by a scheduling request (hereinafter, SR) or random access channel (hereinafter, RACH) procedure of a UE to which a DRX operation is indicated.

The UE may be configured with a maximum of 10 search space (SS) sets per BWP. The UE may monitor PDCCH candidates included in SS sets (hereinafter, monitoring of SS sets).

Since the UE needs to perform blind decoding (BD) on a PDCCH that the UE is not aware of a timing when the PDCCH will be received and a DCI format with which the PDCCH will be received, PDCCH monitoring occupies a large portion of power consumption during the DRX operation.

As technology for power saving in future wireless communication systems (e.g., a Rel-17 NR system etc.), various methods related to PDCCH monitoring adaptation through which the UE reduces power consumption within a DRX active time may be used. Examples of PDCCH monitoring adaptation include PDCCH monitoring skipping (hereinafter, skipping) and SS set group switching (hereinafter, switching).

For PDCCH monitoring adaptation, a BS may indicate, to the UE, information related to PDCCH monitoring adaptation using various DCI formats. The UE may monitor a PDCCH according to a PDCCH monitoring adaptation operation based on the corresponding indication. The above discussion is currently in progress and, in the present disclosure, the above-described PDCCH monitoring adaptation operations may be collectively referred to as first PDCCH monitoring adaptation for convenience.

An example of the present disclosure proposes PDCCH monitoring adaptation methods that operate implicitly when the UE to which a DCI-based first PDCCH monitoring adaptation operation is indicated transmits an SR or an RACH. In the present disclosure, a PDCCH monitoring adaptation operation according to transmission of the SR or the RACH of the UE may be referred to as implicit monitoring adaptation or second monitoring adaptation.

However, if a person skilled in the art clearly understands the meaning of the first monitoring adaptation and the second monitoring adaptation without confusion therebetween according to description, the expressions "first" and/or "second" may be omitted. For example, PDCCH monitoring may mean any one of a first PDCCH monitoring adaptation method or a second PDCCH monitoring adaptation method or both the first PDCCH monitoring adaptation method and the second PDCCH monitoring adaptation method, depending on the flow of description.

In this disclosure, parameters for configuring a PDCCH monitoring window for implicit monitoring adaptation may be configured. This operation may be at the discretion of the BS, and the BS may indicate the operation to the UE after an RRC configuration procedure.

In the following description, embodiments will be separately described for clarification of explanation and should not be limitedly interpreted as meaning that they are independently performed. For example, embodiments to be described later may be implemented individually, but at least some thereof may be implemented in a combined form within the scope that they do not conflict with each other.

Meanwhile, embodiments to be described later may be applied to, for example, extended reality (XR). XR is a concept that encompasses augmented reality (AR), virtual reality (VR), and mixed reality (MR). XR is characterized in that a timing when traffic is expected to be received is fixed to frames per second (fps) and traffic may be received later or earlier than the expected timing due to the influence of jitter. This jitter of XR traffic is represented as a truncated Gaussian probability distribution. Therefore, a power saving effect may be expected by cyclically configuring DRX according to fps. Even when DRX is not configured, if PDCCH monitoring adaptation is configured, the power saving effect may be expected only by PDCCH monitoring adaptation. It is apparent that the power saving effect may also be expected by configuring both DRX and PDCCH monitoring adaptation.

An expected traffic reception timing and an expected reception timing which is caused by the influence of jitter may be expressed as a probability, and embodiments to be described later may be applied to achieve the power saving effect in an XR environment as described above.

In consideration of the jitter of XR traffic, an operation in which the UE monitors a PDCCH for a short time within DRX and then enters micro-sleep may be considered. This micro-sleep operation may be implemented as a skipping operation. Additionally, during the micro-sleep operation, it may be expected that the UE will receive a UL grant according to transmission of the SR and/or the RACH based on [Embodiment #1] and/or [Embodiment #2] to be described later.

While the present disclosure proposes an operation through DCI reception within a DRX active time by way of example, the same operation may be applied to the UE for which DRX is not configured.

Prior to a description of the present disclosure, the overall operation processes of the UE and BS for implementing the embodiments of the present disclosure will now be described.

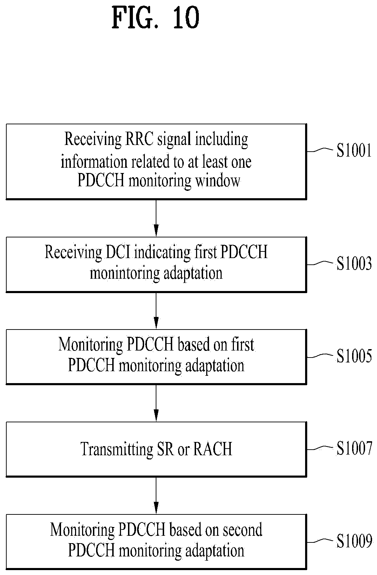

For example, in communication systems such as LTE and NR, when a DRX operation and an operation related to the embodiments proposed in the present disclosure are configured for a UE in an RRC_CONNECTED mode, the UE that receives DCI indicating first PDCCH monitoring adaptation and monitors a PDCCH based on the first PDCCH monitoring adaptation may implicitly perform a second PDCCH monitoring adaptation operation (i.e., implicit monitoring adaptation) as illustrated in FIGS. 10 to 12 while transmitting an SR or an RACH.

FIG. 10 is a diagram for explaining the overall operation process of a UE for implementing embodiments of the present disclosure.

Referring to FIG. 10, the UE may receive a radio resource control (RRC) signal including information related to a PDCCH monitoring window for a PDCCH monitoring adaptation operation according to transmission of an SR and/or an RACH (S1001). For example, the UE may receive the RRC signal including information related to a UL grant window and/or an RAR window based on [Embodiment #1-1].

The UE may receive DCI indicating a first PDCCH monitoring adaptation operation (S1003). The UE may monitor a PDCCH based on the first PDCCH monitoring adaptation operation (S1005).

The UE may transmit the SR and/or the RACH (S1007). In addition, the UE may monitor the PDCCH based on a second PDCCH monitoring adaptation operation according to transmission of the SR and/or the RACH (S1009). For example, the UE may monitor the PDCCH based on the second PDCCH monitoring adaptation operation based on [Embodiment #1] and/or [Embodiment #2].

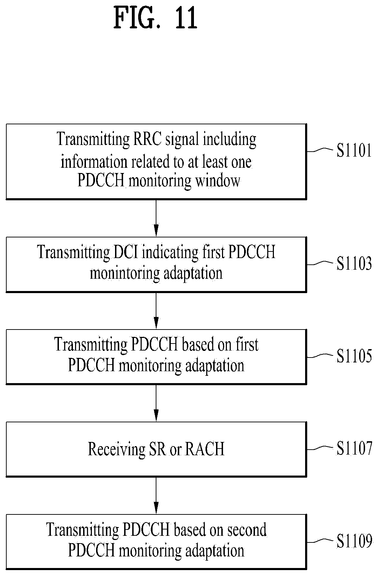

FIG. 11 is a diagram for explaining the overall operation process of a BS for implementing embodiments of the present disclosure.

Referring to FIG. 11, the BS may transmit an RRC signal including information related to a PDCCH monitoring window for a PDCCH monitoring adaptation operation according to transmission of an SR and/or an RACH (S1101). For example, the BS may transmit the RRC signal including information related to a UL grant window and/or an RAR window based on [Embodiment #1-1].

The BS may transmit DCI indicating a first PDCCH monitoring adaptation operation (S1103). Additionally, the BS may transmit a PDCCH based on the first PDCCH monitoring adaptation operation (S1105).

The BS may receive the SR and/or the RACH (S1107). In addition, the BS may transmit the PDCCH based on a second PDCCH monitoring adaptation operation according to transmission of the SR and/or the RACH (S1109). For example, the BS may transmit the PDCCH based on the second PDCCH monitoring adaptation operation based on [Embodiment #1] and/or [Embodiment #2].

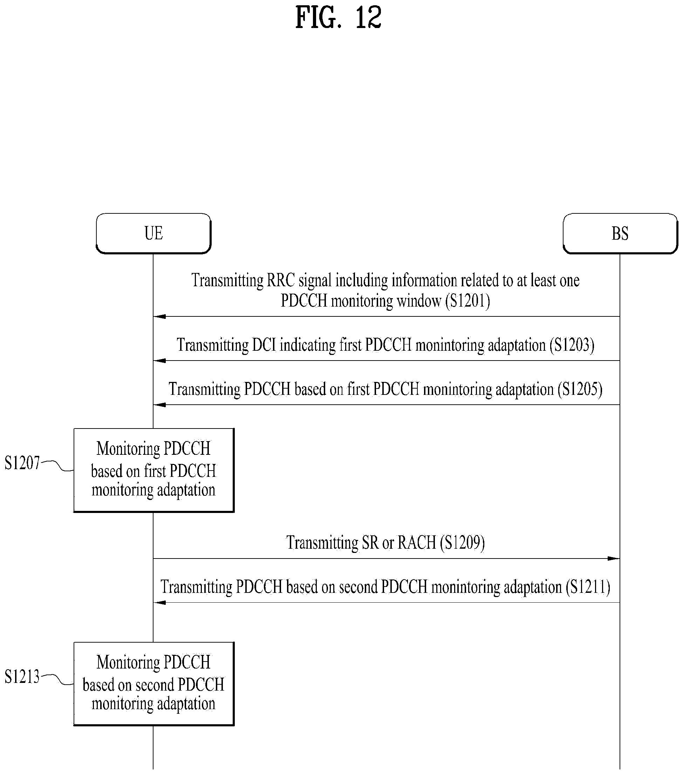

FIG. 12 is a diagram for explaining the overall operation process of a network for implementing embodiments of the present disclosure.

Referring to FIG. 12, the BS may transmit to the UE an RRC signal including information related to a PDCCH monitoring window for a PDCCH monitoring adaptation operation according to transmission of an SR and/or an RACH of the UE (S1201). For example, the BS may transmit the RRC signal including information related to a UL grant monitoring window and/or a PDCCH monitoring window for an RAR based on [Embodiment #1-1].

The BS may transmit DCI indicating a first PDCCH monitoring adaptation operation to the UE (S1203). In addition, the BS may transmit a PDCCH based on the first PDCCH monitoring adaptation operation (S1205). The UE may monitor the PDCCH based on the first PDCCH monitoring adaptation operation (S1207).

The UE may transmit the SR and/or the RACH to the BS (S1209). The BS may transmit the PDCCH to the UE based on a second PDCCH monitoring adaptation operation according to transmission of the SR and/or the RACH (S1211). For example, the BS may transmit the PDCCH based on the second PDCCH monitoring adaptation operation based on [Embodiment #1] and/or [Embodiment #2].

The UE may monitor the PDCCH based on the second PDCCH monitoring adaptation operation according to transmission of the SR and/or the RACH (S1213). For example, the UE may monitor the PDCCH based on the second PDCCH monitoring adaptation operation based on [Embodiment #1] and/or [Embodiment #2].

For example, at least one of embodiments described below may be applied to the operation of the UE based on the second PDCCH monitoring adaptation (e.g., implicit monitoring adaptation). In FIGS. 10 to 12, it is assumed that the UE performs the second PDCCH monitoring adaptation (e.g., implicit monitoring adaptation) as the UE transmits the SR or the RACH, but the present disclosure is not limited thereto and may be extensively applied to other UL transmission.

Meanwhile, the second PDCCH monitoring adaptation may be initiated immediately after transmission of the SR or the RACH or may be initiated after a predetermined time from a transmission timing of the SR or the RACH. For example, the predetermined time may be predefined or configured through RRC signaling.

To indicate the release/termination of the operation of the UE based on the first PDCCH monitoring adaptation and/or the second PDCCH monitoring adaptation, the same method as a method used in the initiation of the operation of the UE based on the first PDCCH monitoring adaptation and/or the second PDCCH monitoring adaptation may be used.

As the first PDCCH monitoring adaptation and/or the second PDCCH monitoring adaptation is initiated, the UE may continuously perform an operation according to the first PDCCH monitoring adaptation and/or the second PDCCH monitoring adaptation, which will be described later, until a timing at which the termination of the operation is indicated. Alternatively, the UE may periodically perform the operation or perform the operation only for a predetermined time (e.g., based on a timer). Alternatively, the operation may be terminated as event conditions for the termination of the operation are satisfied.

Meanwhile, the first PDCCH monitoring adaptation and/or the second PDCCH monitoring adaptation, which will be described later, may be configured for each SS set/DCI format to be monitored. Additionally, the first PDCCH monitoring adaptation and/or the second PDCCH monitoring adaptation may not be applied to a specific SS set/specific DCI format as an exceptional case. Error handling of the UE/BS may be defined in relation to PDCCH monitoring adaptation.

In the operations described with reference to FIGS. 10 to 12, the BS (or gNB) may configure RRC parameters for the UE. The RRC parameters may include configurations related to monitoring adaptation (e.g., an operation according to PDCCH monitoring adaptation and/or a PDCCH monitoring window configuration) described in the present disclosure.

Some of the embodiments proposed in the present disclosure may be selectively applied. The embodiments may be performed independently without being separately combined with other embodiments, or one or more embodiments may be combined and performed in an associated form. Some terms, symbols, orders, etc. used to describe the present disclosure may be replaced with other terms, symbols, orders, etc. as long as the principle of the disclosure is maintained.

Hereinafter, while the present disclosure will exemplarily describe an arbitrary structure for PDCCH monitoring adaptation and transmission and reception of an SR, an RACH, and a UL grant in order to explain the principle of the embodiments, the proposed embodiments are not limited to specific DRX or a specific type of DCI transmission or reception unless stated otherwise. Therefore, it is obvious that the embodiments proposed in the present disclosure may be applied to a PDCCH monitoring adaptation operation according to DCI transmission and reception, even if there is no separate explanation, as long as the corresponding principle is not violated.

In the present disclosure, it is assumed that, while the UE performs a DRX operation, first PDCCH monitoring adaptation (e.g., SS set group switching or PDCCH monitoring skipping) is indicated to the UE, so that the UE monitors a PDCCH based on the first PDCCH monitoring adaptation.

Here, SS set group switching refers to reducing the number of monitored SS sets to a portion of all SS sets. In addition, PDCCH monitoring skipping refers to stopping PDCCH monitoring for a predetermined time.

For example, for SS set group switching, two SS set groups including SS sets are defined. In this case, each SS set group includes a smaller number of SS sets than the number of SS sets that may be generally configured in one BWP. The UE is indicated to monitor only one SS set group among the two SS set groups.

Therefore, compared to an existing NR UE monitoring all SS sets that is configurable in the BWP, a power saving effect may be expected because fewer SS sets may be monitored.

As another example, PDCCH monitoring skipping means stopping PDCCH monitoring for a specific duration indicated to the UE. By stopping PDCCH monitoring for a short period of time, the UE may expect a micro-sleep effect and achieve the power saving effect.

Meanwhile, when the UE monitoring a PDCCH according to the first PDCCH monitoring adaptation transmits an SR or an RACH, the number of SS sets from which a UL grant response corresponding to the SR and/or the RACH may be expected may be insufficient. For example, the BS may not predict at what timing the UE will transmit the SR and/or the RACH, so that the BS may indicate the first PDCCH monitoring adaptation to the UE without considering transmission of the SR and/or the RACH.

However, if SS sets allowed to perform monitoring according to the first PDCCH monitoring adaptation do not include an SS set for receiving a UL grant corresponding to the SR and/or the RACH or include only a small number of SS sets, even when the UE transmits the SR and/or the RACH, subsequent procedures according to transmission of the SR and/or the RACH may not be efficiently performed because SS sets for receiving the UL grant are not sufficient.

Therefore, when the BS should unexpectedly transmit a PDCCH (e.g., UL grant as a response to transmission of the SR and/or the RACH of the UE), monitoring of an SS set for receiving the PDCCH needs to be permitted.

For example, when the UE transmits the SR and/or the RACH, an SS set for receiving the UL grant for the SR and/or the RACH needs to be configured so that the UE may perform monitoring despite the first monitoring adaptation operation.

In other words, if the UE is configured to perform monitoring of the SS set for limitedly receiving the UL grant for the SR and/or the RACH only when the UE transmits the SR and/or the RACH, a power saving effect may be obtained through the first PDCCH monitoring adaptation and an effect of smoothly performing procedures after an SR and/or RACH operation may also be obtained.

Therefore, a technique is proposed for smoothing a response to the SR or the RACH without reducing the power saving effect by continuing the pre-indicated first monitoring adaptation operation as much as possible.

### 1. Embodiment #1: Implicit PDCCH Monitoring Adaptation triggered by SR

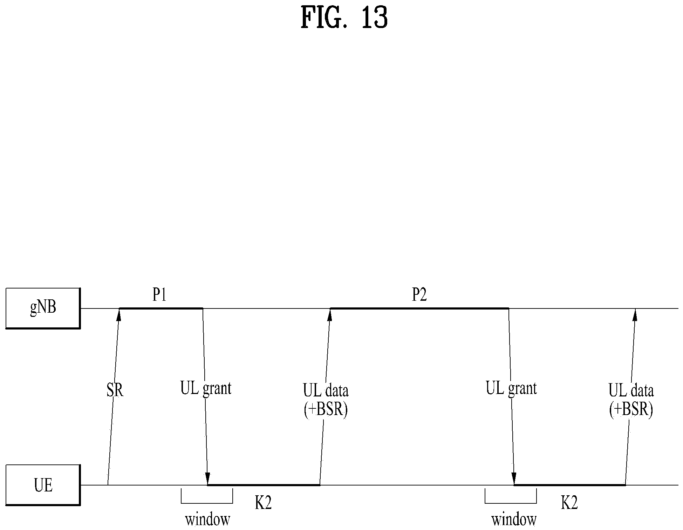

FIG. 13 sequentially illustrates SR transmission of a UE and a response of a BS.

Referring to FIG. 13, 1) if information to be transmitted to the BS is present in a buffer, the UE transmits an Sr in order to transmit the information stored in the buffer to the BS.

2) Upon detecting the SR, the BS may prepare a scheduling resource for a PUSCH and encode a PDCCH (i.e., a UL grant). Here, the time required to detect the SR and encode the PDCCH may be referred to as a processing time P1 of the BS.

3) If a K2 time after receiving the UL grant has elapsed, the UE may transmit the UL data stored in the buffer and a buffer status report (BSR) through the PUSCH. In this case, K2 is a gap between scheduling DCI and a scheduled PUSCH and may be represented in units of slots.

4) The BS may decode the PUSCH, prepare a scheduling resource for the remaining UL data confirmed through the BSR, and encode the PDCCH (i.e., UL grant). Here, the time required to decode the PUSCH and encode the PDCCH may be referred to as a processing time P2 of the BS.

5) If the K2 time after receiving the UL grant has elapsed, the UE may transmit the UL data stored in the buffer and the BSR through the PUSCH. In this case, K2 is a gap between the scheduling DCI and the scheduled PUSCH and may be represented in units of slots.

Here, P1 and P2 may be represented in units of slots or symbols. In the units of symbols, P1 and P2 may be calculated based on a slot in which a corresponding symbol is included or based on the corresponding symbol.

Meanwhile, if the BS checks the BSR received in process 3) and confirms that the UE has transmitted all of the UL data stored in the buffer, processes 4) and 5) may be omitted.

According to FIG. 13, the UE may expect to receive the UL grant twice. It is assumed that the UL grant received in process 3) is referred to as a first UL grant, and the UL grant received in process 6) is referred to as a second UL grant. Here, the second UL grant may not occur depending on a buffer situation of the UE.

Despite variables such as transmission latency, timings at which the UL grant is received twice may be predicted to some extent according to the transmission and reception procedures between the UE and BS as illustrated in FIG. 13. For example, if a timing at which the UE transmits the SR is t1, and a timing at which the UE transmits the PUSCH including the first UL data and the BSR is t2, the timings at which the respective UL grants are received are as follows.
- First UL grant: t1+P1
- Second UL Grant: t2+P2

Therefore, even when the UE is performing the first PDCCH monitoring adaptation operation so that the number of SS sets in which the UL grants are expected to be received is insufficient, if blind decoding (BD) is additionally performed only at the time at which each UL grant is received, scheduling information for the SR may be received without any problem. Therefore, in the embodiments of the present disclosure, a UL grant window, which is a monitoring window including expected timings at which the first UL grant and the second UL grant are expected to be received, is defined in consideration of the corresponding reception timings and transmission latency.

### (1) Embodiment #1-1: UL Grant Window Configuration

The UL grant window, which is a monitoring window including an expected timing when reception of the UL grant is expected, may be defined using an offset, a window duration, and an offset reference point. The BS may configure the window duration based on the expected timing by determining transmission latency in consideration of a channel environment, etc. Additionally, the BS may determine the position of the UL grant window in the time domain through the starting point and offset of the UL grant window. The UL grant window may be configured to be valid only within a DRX active time. Here, respective parameters including the offset and the window duration may be configured by the BS for the UE in an RRC configuration procedure.

The window duration of the UL grant window may be configured similarly to configuration of a random access response (RAR) window for receiving Msg2 (RAR) in an RACH procedure of Rel-15 and Rel-16 standards. For example, the duration of the UL grant window may be defined by configuration of the BS. Alternatively, if the UL grant window is not configured, the UL grant window may be configured by using the same value as the RAR window or adding a predetermined offset to the RAR window. In this case, the offset may be a fixed value or configured by RRC. The duration of the RAR window may be configured as shown in [Table 6] according to configuration of RACH-configGeneric in standard document TS.38.331.

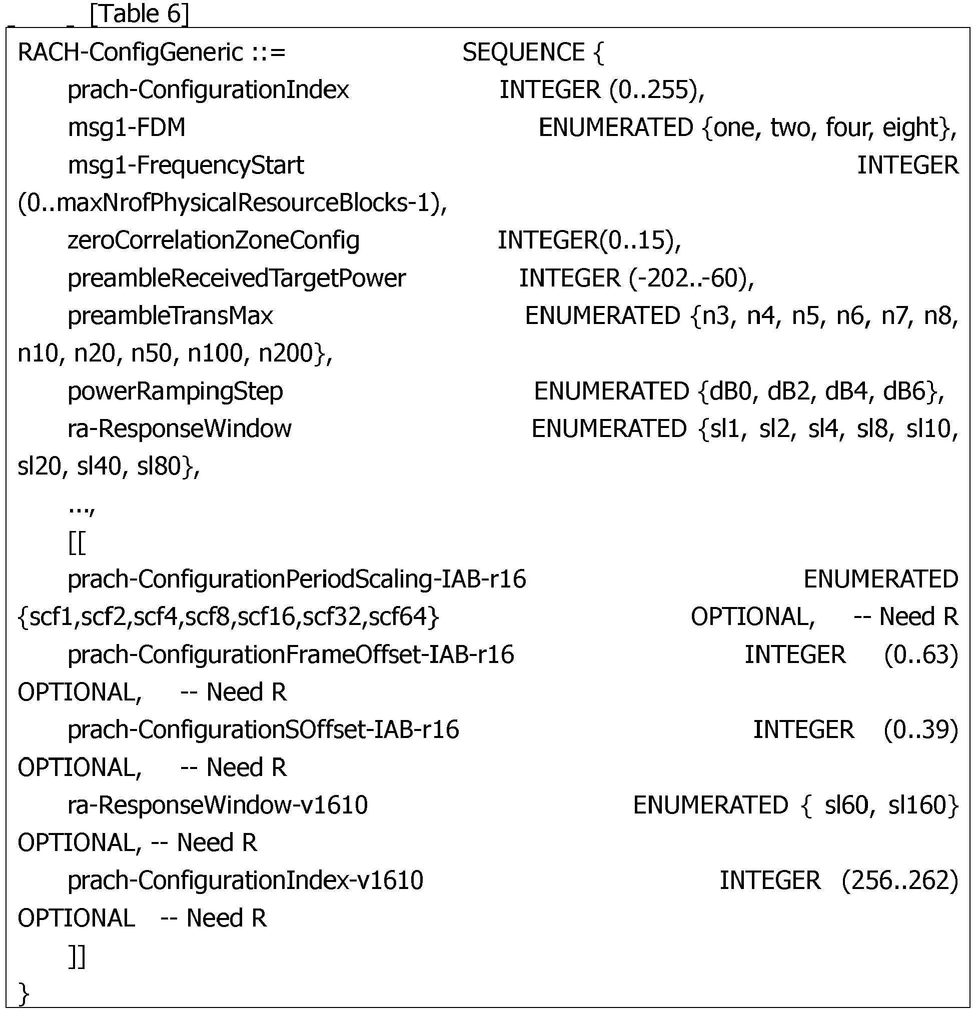

According to the first PDCCH monitoring adaptation, the duration of the UL grant window in which the UE monitoring the PDCCH may expect a response to the SR may be configured as various lengths using slot units or symbol units. Additionally, the BS may configure for the UE one of various lengths based on slot units or symbol units. Meanwhile, the BS may configure the lengths of the durations of UL grant windows for the first UL grant and the second UL grant to be the same or different.

Meanwhile, the position of the UL grant window in the time domain may be configured in various ways.

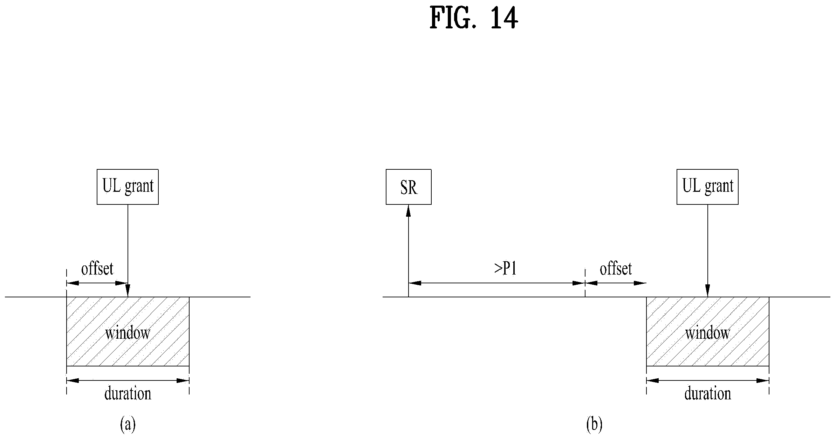

Referring to FIG. 14(a), a reference point may be defined as an expected timing of the first UL grant and/or the second UL grant, and an offset may be represented as the number of symbols and the number of slots indicating how far ahead the starting point of a UL grant window duration is from the reference point in the time domain.

That is, the UL grant window duration starts prior to a predetermined time from the reference point, and the predetermined time may be expressed in units of symbols or in units of slots.

In this case, the expected timing of the UL grant may be obtained through an SR transmission timing of the UE, a first PUSCH transmission timing of the UE, and P1 and/or P2 value. P1 and P2, which are processing times of the BS, may be configured for the UE in an RRC procedure. Alternatively, P1 and P2 may not be configured separately and may be configured as fixed minimum values that all BSs satisfy. Since the starting point of the UL grant window duration is earlier in time than the reference point, the offset may be interpreted as being ahead in time from the reference point. For example, the offset may be configured as a negative or positive number, and both cases may interpret the UL grant window as starting from a timing prior to the absolute value of the offset from the reference point. In other words, an interval between the starting point of the UL grant window and the reference point may correspond to the absolute value of the offset, and the starting point of the UL grant window may be earlier in time than the reference point.

Referring to FIG. 14(b), the reference point may be defined as a timing after a predetermined time after the UE transmits the SR. Here, the predetermined time may be expressed in units of slots or symbols. For example, the predetermined time may be expressed as the number of slots or the number of symbols.

In order to configure the reference point, a minimum gap may be required to ensure a processing time of the BS. For example, the minimum gap may be a value greater than P1. In this case, the minimum gap may be expressed in units of slots or symbols.

For example, the reference point may be a slot after a time equal to the gap after P1 from a slot of an SR transmission timing of the UE has elapsed. For example, the reference point may be a slot after a (P1+gap) time has elapsed from a slot of the SR transmission timing.

Alternatively, the reference point may be a symbol of a timing when P1 or more symbols have elapsed from the last symbol of the SR transmission of the UE or may be a slot in which the corresponding symbol is included. For example, the reference point may be a symbol at the timing when the (P1+gap) time has elapsed from the last symbol of SR transmission or may be a slot in which the corresponding symbol is included.

Here, the offset may be represented in units of symbols or slots. In the units of symbols, the offset may be configured as a specific symbol in which the starting point of the duration of the UL grant window is included in a specific slot or may be configured as the starting symbol of a slot in which the corresponding symbol is included. Meanwhile, a constraint may be configured such that the starting timing of the duration of the UL grant window configured based on the reference point and offset should be earlier in time than the expected time of the UL grant.

### (2) Embodiment #1-2: PDCCH Monitoring in UL Grant Window

The UL grant window described in Embodiment #1-1 has been configured so that the UE performing the first PDCCH monitoring adaptation within the DRX active time expects to receive the UL grant as a response to the SR without a problem. To this end, second PDCCH monitoring adaptation, which is new monitoring adaptation for the response to the SR or the RACH, different from the currently operating first PDCCH monitoring adaptation may be configured. The second PDCCH monitoring adaptation may be implicitly performed by the UE due to SR transmission, differently from the first PDCCH monitoring adaptation explicitly performed through the DCI. This implicit PDCCH monitoring adaptation operation of the UE (i.e., second PDCCH monitoring adaptation) may be performed only within the UL grant window. The second PDCCH monitoring and BD operation of the UE within the UL grant window may be at least one of three operations below, and the BS may configure at least one of the three operations below for the UE.

### 1) Operation #1:

Regardless of the first PDCCH monitoring adaptation operation of the UE, the UE monitors, within the UL grant window, all SS sets in which the UE expects to receive a UL grant for an SR.

For example, based on a type of RNTI with which the UL grant for the SR may be scrambled, all SS sets corresponding to the type of RNTI may be monitored. For example, all SS sets capable of transmitting a UL grant scrambled with a C-RNTI, a CS-RNTI, an MCS-RNTI, or an MCS-C-RNTI may be monitored.

Alternatively, for example, both a Type 3-PDCCH CSS set and a USS set in which the UL grant for the SR is received may be monitored.

The UE may temporarily ignore the existing indicated first PDCCH monitoring adaptation operation within the configured UL grant window and perform monitoring for all SS sets in which the response to the SR may be expected and BD. In this case, since the first PDCCH monitoring adaptation operation indicated for the power saving effect is ignored during the duration of the UL grant window, the BS may need to configure the duration of the UL grant window as shortly as possible in order to maximize the power saving effect.

### 2) Operation #2:

An SS set (group) for the UL grant as the response to the SR may be separately configured and, within the configured UL grant window, the SS set group configured for the UL grant may be monitored together with SS set monitoring according to the first PDCCH monitoring adaptation.

Differently from Operation #1, the UE may monitor only some SS sets configured for the second PDCCH monitoring adaptation, rather than all SS sets. In this case, configuration for additional SS sets for the second PDCCH monitoring adaptation needs to be associated with configuration of the UL grant window. For example, monitoring may not be performed because the additional SS sets are not included within the duration of the UL grant window due to periodicity. Therefore, the BS may configure only SS sets, periodicities of which are shorter than the duration of the UL grant window, as a monitoring target (i.e., a target of the second PDCCH monitoring adaptation) within the UL grant window. Alternatively, SS sets in which a PDCCH monitoring occasion is included more than once within the UL grant window may be configured as the additional monitoring target (i.e., target of the second PDCCH monitoring adaptation).

Alternatively, the periodicity of an SS set may be temporarily changed to maximize the effect of the UL grant window of a short duration and to maintain the power saving effect. For example, SS sets corresponding to SS set IDs #1 and #2 may be configured to be additionally monitored within the UL grant window, and the periodicities of SS set IDs #1 and #2 may be temporarily considered as one slot only within the UL grant window. For example, even when the periodicities of SS set IDs #1 and #2 are longer than one slot, the periodicities of SS set IDs #1 and #2 may be changed to one slot within the UL grant window. Meanwhile, changing the periodicity of an SS set may be limited to a USS.

### 3) Operation #3

Regardless of the first PDCCH monitoring adaptation operation of the UE, the UE may monitor SS sets related with a specific control resource set (CORESET) within the UL grant window.

2) Similar to Operation #2, additional PDCCH monitoring other than a monitoring operation due to the first PDCCH monitoring adaptation may be configured for the UE in units of CORESETs rather than SS sets.

In this case, the UE may be configured to monitor all SS sets associated with a specific CORESET by selecting the specific CORESET. In this case, like "2) Operation #2", the periodicity of a corresponding SS set may be temporarily changed within the UL grant window. For example, it is assumed that, within the UL grant window, an SS set group switching operation is indicated to the UE, SS set ID #1 is included in an SS set group to be monitored, and SS set ID #1 is associated with CORESET ID #1. In this case, the UE may also additionally monitor all other SS sets that are associated with CORESET ID #1 but are not included in an SS set group indicated to perform monitoring to the UE.

For example, it is assumed that SS set IDs #1, #2, and #3 are included in SS set group #0, SS set IDs #4, #5, and #6 are included in SS set group #1, and SS set ID #1 and SS set IDs #4 and #5 are associated with CORESET ID #1. If monitoring of SS set group #0 is indicated to the UE through an SS set group switching operation, since SS set ID #1 is associated with CORESET ID #1, SS set IDs #4 and #5 which are also associated with CORESET ID #1 may be monitored together even if SS set IDs #4 and #5 are not included in SS set group #0.

Additionally, if the UE has successfully decoded the UL grant that the UE expects to receive within the UL grant window, the UE may terminate subsequent operations within the UL grant window. For example, if the UE has received the UL grant once within the UL grant window, the UE may stop the second PDCCH monitoring adaptation operation in the remaining UL grant window duration and perform PDCCH monitoring based on the first PDCCH monitoring adaptation.

Meanwhile, the BS may fail to receive an SR transmitted by the UE. To prepare for this, when the UE fails to receive a UL grant in a first UL grant window after an SR transmission timing, the UE may determine that the BS has failed to receive the SR (e.g., missing error) and retransmit the SR. Alternatively, the UE may retransmit the SR when the UE is not scheduled with a suitable TB corresponding to a scheduled PUSCH in the first UL grant window after the SR transmission timing. For example, the UE may retransmit the SR when the BS schedules transmission of a different type of data or UL channel from data for which the UE has requested scheduling through the SR in the first UL grant window after SR transmission timing.

Meanwhile, when the UE retransmits the SR, a time gap of a predetermined time may be required. In this case, the time gap may include the time consumed for the UE to decode the UL grant. That is, the time gap may be equal to or longer than the time required to decode the UL grant. In addition, the time gap may be defined as a gap in a specific ms or a specific symbol unit.

For example, the UE may retransmit the SR after the time gap has elapsed from the end timing of the UL grant window (or from a symbol corresponding to the end timing).

Meanwhile, the BS may differently configure SS sets (or SS set group) to be monitored within the UL grant window according to various conditions. For example, SS sets to be monitored according to the second PDCCH monitoring adaptation are SS sets in which the UE may expect to receive the UL grant as the response to SR transmission of the UE, so that the SS sets may be differently configured according to configuration of the SR, a transmission timing of the SR, and/or an SR PUCCH resource.

### (3) Embodiment #1-3: SR Priority

An SR PUCCH of the UE may be categorized into high priority (HP) and low priority (LP). These priorities are configured using phy-PriorityIndex of *SchedulingRequestResourceConfig* of 3GPP TS.38.331 as shown in [Table 7].

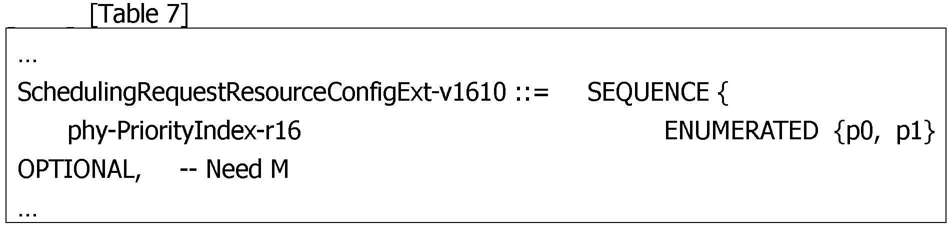

### The operations of the UE and BS may be different depending on the priority configuration of the SR as described above. For example, the UL grant windows of the UE may be separately configured with respect to the case in which an SR PUCCH is transmitted with the HP and the case in which the SR PUCCH is transmitted with the LP. Further, the operation of the UE within each UL grant window may be configured to be the same as or different from one of the three operations described above.

For example, the duration of the UL grant window for an HP SR may be configured as a larger value than the duration of the UL grant window for an LP SR. Additionally, among the above-described operations, the second PDCCH monitoring adaptation may be performed according to "1) Operation #1".

The UL grant window for the HP SR may be configured to be ahead of the UL grant window for the LP SR in time, so that the UL grant, which is a response to the SR, may be expected to be received more quickly with lower latency. Therefore, even though the power saving effect is not significant, the UL grant window for the HP SR may be configured such that the UL grant, which is a response to the HP SR, may be expected to be received as quickly as possible.

In the case of the LP SR, the UE may configure the starting timing of the UL grant window after a slot of a large value after a minimum gap from the starting point (or ending point) of the UL grant window of the HR SR or the offset described in Embodiment #1-1 may be configured as a very large value. In other words, the UL grant window of the LP SR may be configured to be located later in time than the UL grant of the HP SR. The duration of the UL grant window of the LP SR may be configured as a smaller value than the duration of the UL grant window of the HP SR. Additionally, among the above-described operations, the second PDCCH monitoring adaptation may be performed based on "2) Operation #2" or "3) Operation #3". Therefore, although reception of the UL grant, which is a response to the LP, may be expected somewhat later after the first SR transmission, the power saving effect may be maximized.

As another example, when the SR is transmitted with the HP, the UE may immediately stop the first PDCCH monitoring adaptation operation, and the BS may schedule a PUSCH for the UE to correspond to the HP SR. When the SR is transmitted with the LP, the UE may perform the same operation as a method defined in the standard after first PDCCH monitoring adaptation is completed.

In order to explain the principle of the embodiments, the present disclosure exemplarily describes an arbitrary structure for SR transmission, the UL grant window configuration of the UL grant for the HP SR and the UL grant for the LP SR, and UL grant transmission, but the proposed embodiments are not limited to a specific UL grant window type unless stated otherwise.

Additionally, the BS may schedule the PUSCH by transmitting the UL grant after the first PDCCH monitoring adaptation of the UE is terminated. Therefore, the BS may configure, for the UE, the UL grant window for the HP SR and the UL grant window for the LP SR in various ways in an RRC configuration procedure without being limited to the embodiments according to the present disclosure.

Meanwhile, an SS set (group) for the HP SR and an SS set (group) for the LP SR may be differently configured in association with the UL grant window configuration. For example, the periodicity of an SS set (group) in which the UE may expect the UL grant for the HP SR may be configured to be very short.

To more frequently perform monitoring than a BD/CCE limit of slot units, the concept of a span introduced in Rel-16 URLLC may be used. A UE with capabilities that support span-level monitoring may configure the duration of the UL grant window for the UL grant, which is a response to the HP SR, as short slots such as 1 slot or 2 slots. Alternatively, the UL grant window for the HP SR may be configured in more detail in symbol units, such as 20 symbols. In this case, if span-level monitoring and an SS set (group) with a very short periodicity are configured for the UE, the UE may expect to receive the UL grant, which is a response to the HP SR, in a very short time. On the other hand, the periodicity of the SS set (group) in which the UE may expect to receive the UL grant for the LP SR may be configured to be very long. However, the BS may configure an SS set (group) in various ways for the UE by distinguishing an SS set (group) for the HP SR and an SS set (group) for the LP SR in the RRC configuration procedure without being limited to the above example.

The BS may configure, for the UE, the UL grant window for the HP SR, the UL grant window for the LP SR, the SS set (group) for the HP SR, and the SS set (group) for the LP SR to be different or identical in the RRC configuration procedure. This may be selected and configured by the BS.

### 2. Embodiment #2: Implicit PDCCH Monitoring Adaptation triggered by RACH

An RACH of the UE is triggered by various factors and is transmitted in one of a contention-based (CB)RA method or a contention-free (CF)RA method. An RAR window in which reception of Msg2 (i.e., RAR), which is a response to transmission of Msg1 (i.e., RACH preamble) of the UE, may be expected has already been defined in Rel-15 and Rel-16 standards. Therefore, Embodiment #2 describes the second PDCCH monitoring adaptation method for a UE monitoring a PDCCH based on the first PDCCH monitoring adaptation to receive Msg2 in the RAR window. For CBRA, Msg2 is scrambled with an RA-RNTI and, for CFRA, Msg2 is scrambled with a C-RNTI. Therefore, the second PDCCH monitoring adaptation for the UL grant, which is a response to the SR described above, may be equally applied to the RAR, which is a response to an RACH within the RAR window.

### (1) Embodiment #2-1: PDCCH Monitoring in RAR Window

The second PDCCH monitoring adaptation operation performed in the RAR window described in Embodiment #2-1 is configured so that the UE performing the first PDCCH monitoring adaptation within a DRX active time expects to receive DCI as a response to the RACH without a problem. To this end, the second PDCCH monitoring adaptation, which is new monitoring adaptation for the response to the RACH that is different from the currently operating first PDCCH monitoring adaptation, may be configured. The second PDCCH monitoring adaptation may be implicitly performed by the UE due to RACH transmission, differently from the first PDCCH monitoring adaptation explicitly performed through the DCI. This implicit PDCCH monitoring adaptation operation of the UE (i.e., second PDCCH monitoring adaptation) may be performed only within the RAR window. In the case of a Msg2 RAR, as described above, RACH transmission may be classified according to CBRA or CFRA. In the case of CBRA, an SS set in which the UE may expect to receive Msg2 is defined in the standard as a Type-2 CSS. In contrast, when the UE transmits CFRA, an SS set in which the UE may expect to receive Msg2 may be configured without distinguishing between a CSS and a USS that may be received with a C-RNTI.

Within the RAR window, the second PDCCH monitoring and BD operation of the UE may be at least one of two operations below, and each operation may be differently or equally configured depending on whether the RACH is transmitted based on CBRA or CFRA.

### 1) Operation #1:

Regardless of the first PDCCH monitoring adaptation operation of the UE, the UE may monitor all SS sets in which the UE may expect to receive a Msg2 RAR for a Msg1 preamble within the RAR window.

The UE may temporarily ignore the existing indicated first PDCCH monitoring adaptation operation within the configured RAR window and perform monitoring for all SS sets in which a response to the Msg1 preamble may be expected and BD. This case may not be applied to CBRA that clearly defines an SS set in which the Msg2 RAR may be expected as a Type1-PDCCH CSS set and may be applied to CFRA in which DCI reception of an RAR may be expected in all SS sets that may be received with a C-RNTI. Alternatively, even if monitoring of the Type1-PDCCH CSS set is omitted in CBRA due to the first PDCCH monitoring adaptation, the Type1-PDCCH CSS set may be monitored within the RAR Window.

In this case, since the first PDCCH monitoring adaptation operation indicated for the power saving effect is ignored during the duration of the RAR window, the BS may need to configure the duration of the RAR window as shortly as possible in order to maximize the power saving effect.

### 2) Operation #2:

An SS set (group) for a Msg2 RAR may be separately configured and, within the configured RAR window, an SS set group configured for the RAR may be monitored together with SS set monitoring according to the first PDCCH monitoring adaptation.

In the case of CBRA, since the SS set for the Msg2 RAR has already been configured in the standards as the Type1-PDCCH CSS set, an SS set (group) configuration for the Msg2 RAR may replace the Type1-PDCCH CSS set. For example, within the RAR window, the UE may monitor the Type1-PDCCH CSS set together with SS set monitoring according to the first PDCCH monitoring adaptation.

Alternatively, the BS may configure, as the Type1-PDCCH CSS set, a CSS set in which the UE may expect reception of a UL grant (i.e., RAR) as a response to transmission of the Msg1 preamble of the UE. In this case, a condition that the duration of the RAR window is longer than the periodicity of the Type1-PDCCH CSS set may be configured. For example, if the UE has been performing a PDCCH monitoring skipping operation or although the Type1-PDCCS CSS set is not included in an SS set that the UE should always monitor despite the PDCCH monitoring skipping operation, the Type1-PDCCH CSS set may be monitored within the duration of the RAR window. In this case, the length of the RAR window duration may be configured to be longer than the periodicity of the Type1-PDCCH CSS set.

As another example, if the Type1-PDCCS CSS set is not included in an SS set group that the UE is currently monitoring based on an SS set group switching operation or although the Type1-PDCCS CSS set is not included in the SS set that the UE should always monitor despite SS set group switching, the Type1-PDCCH CSS set may be monitored within the duration of the RAR window. In this case, the length of the duration of the RAR window may be configured to be longer than the periodicity of the Type1-PDCCH CSS set.

Meanwhile, in the case of CFRA, an SS set (group) in which the UE may expect to receive Msg2 may be configured for the UE in the RRC configuration procedure. Considering that the UE in RRC_CONNECTED mode performs CFRA using a pre-identified PRACH preamble, the SS set (group) in which the UE may expect to receive Msg2 may be advantageously configured as a USS.

Alternatively, an SS set in which a PDCCH monitoring occasion is included more than once within the RAR window may be configured as an additional monitoring target (i.e., a target for which the second PDCCH monitoring adaptation is performed).

Alternatively, the periodicity of an SS set may be temporarily changed to maximize the effect of the RAR window of a short duration and to maintain the power saving effect. For example, SS sets corresponding to SS set IDs #1 and #2 may be configured to be additionally monitored within the RAR window, and the periodicities of SS set IDs #1 and #2 may be temporarily considered as one slot only within the RAR window. For example, even when the periodicities of SS set IDs #1 and #2 are longer than one slot, the periodicities of SS set IDs #1 and #2 may be changed to one slot within the RAR window. Meanwhile, changing the periodicity of an SS set may be limited to a USS.

If the UE has successfully decoded the Msg2 RAR that the UE expects to receive within the RAR window, subsequent operations within the RAR window may be terminated. For example, if the UE has received the RAR once within the RAR window, the UE may stop the second PDCCH monitoring adaptation operation in the remaining RAR window duration and perform PDCCH monitoring based on the first PDCCH monitoring adaptation.

Meanwhile, the BS may fail to receive the Msg1 preamble transmitted by the UE. In this case, the UE may perform a Msg1 preamble retransmission procedure defined in the standard. In general, when the UE fails to receive a UL grant scrambled with an RA-RNTI in the first RAR window after a Msg1 preamble transmission timing, the UE is not scheduled with a suitable TB corresponding to a scheduled PUSCH, or a higher layer fails to distinguish between random access preamble identifiers (RAPIDs), the UE may retransmit the Msg 1 preamble. In this case, the UE may re-perform the operation according to Embodiment #2-1 by retransmitting the Msg1 preamble until a predetermined timing after the last symbol of the RAR window defined in the standard or the last symbol of a PDSCH of the RAR. For example, the UE may re-perform the operation according to Embodiment #2-1 by retransmitting the Msg1 preamble until N_{T,1} + 0.75 ms after the last symbol of the RAR window or the last symbol of the PDSCH of the RAR. Here, N_{T,1} may be a symbol duration corresponding to a PDSCH processing time.

Meanwhile, the BS may configure RAR windows identically or differently according to CFRA or CBRA. The monitoring operations of the UE in the respective RAR windows may be configured to be performed separately from or together with the operations described in Embodiment #1.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

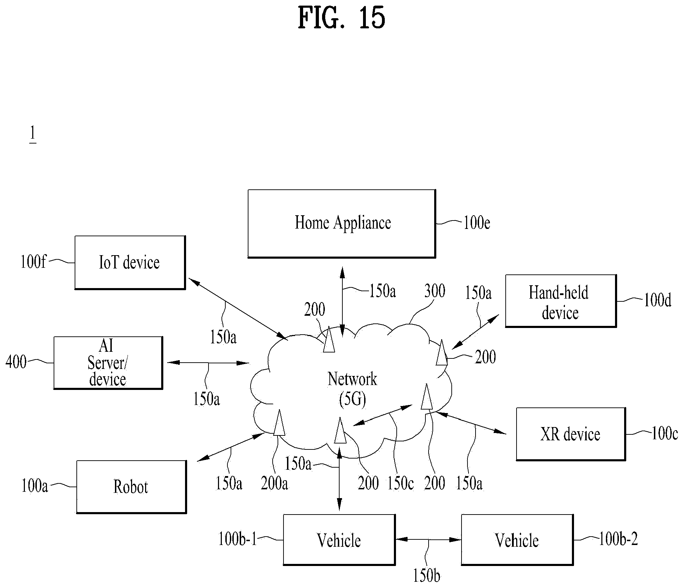

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fjBS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will now be described.

Although the following operations will be described based on a control operation of the processor(s) 102 in terms of the processor(s) 102, software code for performing such an operation may be stored in the memory 104. For example, in the present disclosure, the at least one memory(s) 104 may store instructions or programs as a computer-readable storage medium. The instructions or the programs may cause, when executed, at least one processor operably connected to the at least one memory to perform operations according to embodiments or implementations of the present disclosure, related to the following operations.

For example, the processor(s) 102 may control the transceiver(s) 106 to receive an RRC signal including information related to a PDCCH monitoring window for a PDCCH monitoring adaptation operation according to transmission of an SR and/or an RACH. For example, the processor(s) 102 may control the transceiver(s) 106 to receive the RRC signal including information related to a UL grant window and/or an RAR window based on [Embodiment #1-1].

The processor(s) 102 may control the transceiver(s) 106 to receive DCI indicating a first PDCCH monitoring adaptation operation. Additionally, the processor(s) 102 may monitor a PDCCH based on the first PDCCH monitoring adaptation operation.

The processor(s) 102 may control the transceiver(s) 106 to transmit the SR and/or the RACH. Additionally, the processor(s) 102 may monitor the PDCCH based on a second PDCCH monitoring adaptation operation according to transmission of the SR and/or the RACH. For example, the processor(s) 102 may monitor the PDCCH based on the second PDCCH monitoring adaptation operation based on [Embodiment #1] and/or [Embodiment #2].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 200 and stored in the memory 204 of the second wireless device 200, according to an embodiment of the present disclosure will now be described.

Although the following operations will be described based on a control operation of the processor 202 in terms of the processor 202, software code for performing such an operation may be stored in the memory 204. For example, in the present disclosure, the at least one memory 204 may store instructions or programs as a computer-readable storage medium. The instructions or the programs may cause, when executed, at least one processor operably connected to the at least one memory to perform operations according to embodiments or implementations of the present disclosure, related to the following operations.

For example, the processor(s) 202 may control the transceiver(s) 206 to transmit an RRC signal including information related to a PDCCH monitoring window for a PDCCH monitoring adaptation operation according to transmission of an SR and/or an RACH. For example, the processor(s) 202 may control the transceiver(s) 106 to transmit the RRC signal including information related to a UL grant window and/or an RAR window based on [Embodiment #1-1].

The processor(s) 202 may control the transceiver(s) 106 to transmit DCI indicating a first PDCCH monitoring adaptation operation. Additionally, the processor(s) 202 may control the transceiver(s) 206 to transmit a PDCCH based on the first PDCCH monitoring adaptation operation.

The processor(s) 202 may control the transceiver(s) 206 to receive the SR and/or the RACH. Additionally, the processor(s) 202 may control the transceiver(s) 206 to transmit the PDCCH based on a second PDCCH monitoring adaptation operation according to transmission of the SR and/or the RACH. For example, the processor(s) 202 may control the transceiver(s) 206 to transmit the PDCCH based on the second PDCCH monitoring adaptation operation based on [Embodiment #1] and/or [Embodiment #2].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

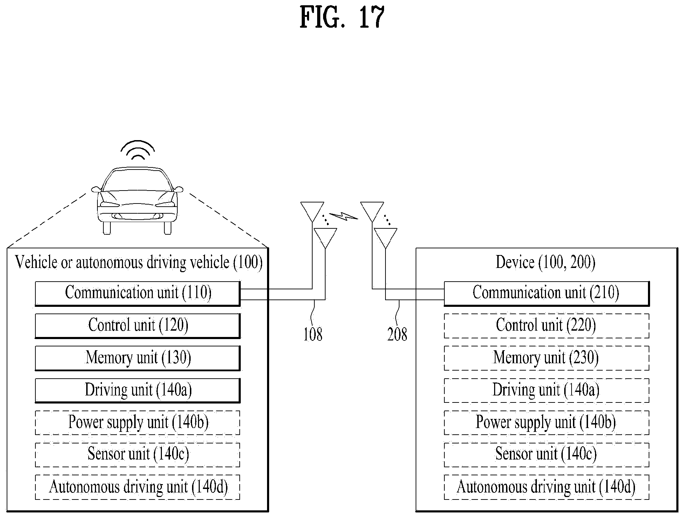

FIG. 17 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 17 a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

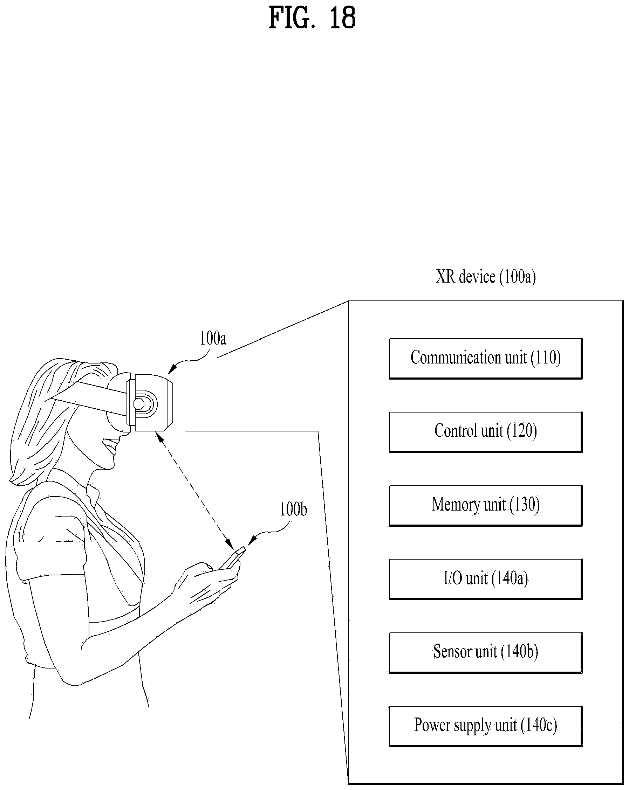

FIG. 18 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 18, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point, etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

While the above-described method of transmitting and receiving a signal in an unlicensed band and an apparatus therefor have been described based on an example applied to a 5G NR system, the method and apparatus are applicable to various wireless communication systems in addition to the 5G NR system.

## Claims

1. A method of receiving a physical downlink control channel (PDCCH) by a user equipment (UE) in a wireless communication system, the method comprising:
monitoring a first search space (SS) set based on PDCCH monitoring adaptation;
transmitting an uplink (UL) signal;
monitoring a second SS set related with the UL signal within a PDCCH monitoring window based on transmission of the UL signal; and
receiving the PDCCH through the second SS set,
wherein the UL signal is a scheduling request (SR) or a random access channel (RACH), and
wherein, within the PDCCH monitoring window, (i) monitoring of the first SS set is skipped and the second SS set is monitored, or (ii) the first SS set and the second SS set are monitored.

2. The method of claim 1, wherein the second SS set is one of all SS sets in which the PDCCH is capable of being received.

3. The method of claim 1, wherein the second SS set has a periodicity shorter than a duration of the PDCCH monitoring window.

4. The method of claim 1, wherein the second SS set is related with a control resource set (CORESET) related with the PDCCH monitoring window.

5. The method of claim 1, wherein monitoring of the second SS set is skipped within the PDCCH monitoring window based on reception of the PDCCH.

6. The method of claim 1, wherein a periodicity of the second SS set is changed to one slot only within the PDCCH monitoring window based on the periodicity of the second SS set exceeding one slot.

7. A user equipment (UE) for receiving a physical downlink control channel (PDCCH) in a wireless communication system, the UE comprising:
at least one transceiver;
at least one processor; and
at least one memory operably connected to the at least one processor and storing instructions that, when executed, cause the at least one processor to perform operations,
wherein the operations comprise:
monitoring a first search space (SS) set based on PDCCH monitoring adaptation;
transmitting an uplink (UL) signal through the at least one transceiver;
monitoring a second SS set related with the UL signal within a PDCCH monitoring window based on transmission of the UL signal; and
receiving, through the at least one transceiver, the PDCCH through the second SS set,
wherein the UL signal is a scheduling request (SR) or a random access channel (RACH), and
wherein, within the PDCCH monitoring window, (i) monitoring of the first SS set is skipped and the second SS set is monitored, or (ii) the first SS set and the second SS set are monitored.

8. The UE of claim 7, wherein the second SS set is one of all SS sets in which the PDCCH is capable of being received.

9. The UE of claim 7, wherein the second SS set has a periodicity shorter than a duration of the PDCCH monitoring window.

10. The UE of claim 7, wherein the second SS set is related with a control resource set (CORESET) related with the PDCCH monitoring window.

11. The UE of claim 7, wherein monitoring of the second SS set is skipped within the PDCCH monitoring window based on reception of the PDCCH.

12. The UE of claim 7, wherein a periodicity of the second SS set is changed to one slot only within the PDCCH monitoring window based on the periodicity of the second SS set exceeding one slot.

13. An apparatus for receiving a physical downlink control channel (PDCCH) in a wireless communication system, the apparatus comprising:
at least one processor; and
at least one memory operably connected to the at least one processor and storing instructions that, when executed, cause the at least one processor to perform operations,
wherein the operations comprise:
monitoring a first search space (SS) set based on PDCCH monitoring adaptation;
transmitting an uplink (UL) signal;
monitoring a second SS set related with the UL signal within a PDCCH monitoring window based on transmission of the UL signal; and
receiving the PDCCH through the second SS set,
wherein the UL signal is a scheduling request (SR) or a random access channel (RACH), and
wherein, within the PDCCH monitoring window, (i) monitoring of the first SS set is skipped and the second SS set is monitored, or (ii) the first SS set and the second SS set are monitored.

14. A computer-readable storage medium including at least one computer program that causes at least one processor to perform operations, the operations comprising:
monitoring a first search space (SS) set based on PDCCH monitoring adaptation;
transmitting an uplink (UL) signal;
monitoring a second SS set related with the UL signal within a PDCCH monitoring window based on transmission of the UL signal; and
receiving the PDCCH through the second SS set,
wherein the UL signal is a scheduling request (SR) or a random access channel (RACH), and
wherein, within the PDCCH monitoring window, (i) monitoring of the first SS set is skipped and the second SS set is monitored, or (ii) the first SS set and the second SS set are monitored.

15. A method of transmitting a physical downlink control channel (PDCCH) by a base station (BS) in a wireless communication system, the method comprising:
transmitting a first PDCCH through a first search space (SS) set based on PDCCH monitoring adaptation;
receiving an uplink (UL) signal; and
transmitting a second PDCCH through a second SS set related with the UL signal within a PDCCH monitoring window based on reception of the UL signal,
wherein the UL signal is a scheduling request (SR) or a random access channel (RACH), and
wherein, within the PDCCH monitoring window, (i) PDCCH transmission through the first SS set is skipped and PDCCH transmission through the second SS set is performed, or (ii) PDCCH transmission through the first SS set and PDCCH transmission through the second SS set are performed.

16. A base station (BS) for transmitting a physical downlink control channel (PDCCH) in a wireless communication system, the BS comprising:
at least one transceiver;
at least one processor; and
at least one memory operably connected to the at least one processor and storing instructions that, when executed, cause the at least one processor to perform operations,
wherein the operations comprise:
transmitting, through the at least one transceiver, a first PDCCH through a first search space (SS) set based on PDCCH monitoring adaptation;
receiving an uplink (UL) signal through the at least one transceiver; and
transmitting, through the at least one transceiver, a second PDCCH through a second SS set related with the UL signal within a PDCCH monitoring window based on reception of the UL signal,
wherein the UL signal is a scheduling request (SR) or a random access channel (RACH), and
wherein, within the PDCCH monitoring window, (i) PDCCH transmission through the first SS set is skipped and PDCCH transmission through the second SS set is performed, or (ii) PDCCH transmission through the first SS set and PDCCH transmission through the second SS set are performed.
